# EUROPEAN PATENT APPLICATION

(11) **EP 4 611 335 A1**
(43) Date of publication of application: **03.09.2025**
(21) Application number: 25155082.8
(22) Date of filing: 30.01.2025
(51) Int. Cl.: H04L 41/12, H04L 45/02

(54) **GLOBAL FABRIC TOPOLOGY DISCOVERY IN DISAGGREGATED SCHEDULED FABRICS**

(30) Priority: 27.02.2024 US 202463558543 P; 25.07.2024 US 202418784687
(71) Applicant: Cisco Technology, Inc., San Jose, CA 95134-1706 (US)
(72) Inventor: SINGH, Tapraj, San Ramon, CA (US); TAPASKAR, Vijay Krishnaji, Palo Alto, CA (US); CHOPRA, Rakesh, Menlo Park, CA (US); BHAGWATULA, Praveen, Cary, NC (US); GARIGIPATI, Srinivas V., San Jose, CA (US)
(74) Representative: Mathys & Squire

(57) **Abstract**

Devices, networks, systems, methods, and processes for discovering a global fabric topology in a Disaggregated Scheduled Fabric (DSF) are described herein. A leaf switch can detect at least one adjacent spine switch connected to at least one system port. The leaf switch may generate local path data or adjacent device information associated with the at least one adjacent spine switch. The leaf switch can retrieve remote path data and may discover, based on the remote path data, at least one remote leaf switch connected to the at least one adjacent spine switch. The leaf switch can generate one or more network paths connecting to the at least one remote leaf switch. The leaf switch may also generate, based on the local path data and the remote path data, global network path data indictive of a plurality of network paths between a plurality of leaf switches in the DSF.

## Description

The present disclosure relates to communication networks. More particularly, the present disclosure relates to a leaf-spine fabric topology in a network.

### BACKGROUND

Networks include a large number of network devices such as spine switches, leaf switches, routers, gateways etc. The spine and leaf switches may be interconnected in a leaf-spine topology to provide multiple routes for forwarding or routing data traffic in the network between endpoints. The spine switches may interconnect the leaf switches to form a backbone of the network. The leaf switches can function as an access layer that connects to host devices. The leaf switches may serve as entry and exit points for traffic originating from or destined to the host devices. When the host devices are connected to different leaf switches, a path between the host devices may include multiple hops. The leaf-spine fabric can provide a scalable and efficient architecture for routing large data flows and traffic within a data center network.

In a cluster of fabric switches, the spine switches can function in a fabric mode, and the leaf switches may function in the fabric mode and/or a network mode. In the fabric mode, the spine switches can perform high-speed switching of the traffic in the data center network. The leaf switches may include system ports, such as network facing ports connected to the host devices and fabric facing ports connected to the spine switches. The spine switches and the leaf switches can be connected in a mesh topology, thereby providing multiple possible paths, *i.e.,* fabric links for transmitting packets over the leaf-spine fabric. A packet exiting a leaf switch may be randomly sprayed, *i.e.,* forwarded over a fabric link. This random spraying of the packets can provide load balancing, and thereby prevent congestion on the fabric links.

If the packets fail to reach a destination or experience delays in the leaf-spine fabric, it is essential to identify a node at which the failure or congestion occurs. Further, network performance metrics such as latency, packet loss, or throughput can be measured effectively only when a packet path can be traced. However, conventional networks do not facilitate tracing the packet path. As a result, the network performance metrics of the network cannot be measured effectively. Furthermore, performance metrics of the fabric links cannot be measured in the conventional networks.

### SUMMARY OF THE DISCLOSURE

Aspects of the invention are set out in the independent claims and preferred features are set out in the dependent claims. Features of one aspect may be applied to each aspect alone or in combination with other features.

Systems and methods for discovering a global fabric topology in a Disaggregated Scheduled Fabric (DSF) in accordance with embodiments of the disclosure are described herein. In some embodiments, a device includes a processor, and a memory communicatively coupled to the processor, wherein the memory includes a topology discovery logic that is configured to detect a plurality of adjacent devices, retrieve remote path data associated with a plurality of remote devices, and identify, based on the remote path data, at least one of the plurality of remote devices connected to at least one of the plurality of adjacent devices.

In some embodiments, the topology discovery logic is further configured to determine at least one adjacent device identifier associated with the at least one of the plurality of adjacent devices.

In some embodiments, the topology discovery logic is further configured to identify a first set of adjacent device ports of the at least one of the plurality of adjacent devices connected to a set of system ports.

In some embodiments, the topology discovery logic is further configured to determine a set of system port identifiers associated with the set of system ports.

In some embodiments, the topology discovery logic is further configured to determine a first set of adjacent device port identifiers associated with the first set of adjacent device ports.

In some embodiments, the topology discovery logic is further configured to generate local path data indicative of at least one of the at least one adjacent device identifier, the set of system port identifiers, or the first set of adjacent device port identifiers.

In some embodiments, the topology discovery logic is further configured to retrieve, from the remote path data, at least one remote device identifier associated with the at least one of the plurality of remote devices.

In some embodiments, the topology discovery logic is further configured to identify, based on the remote path data, a second set of adjacent device ports of the at least one of the plurality of adjacent devices connected to the at least one of the plurality of remote devices.

In some embodiments, the topology discovery logic is further configured to determine a second set of adjacent device port identifiers associated with the second set of adjacent device ports.

In some embodiments, the topology discovery logic is further configured to generate global network path data based on the local path data and the remote path data.

In some embodiments, the global network path data is indicative of a plurality of network paths connecting to the at least one of the plurality of remote devices.

In some embodiments, each network path of the plurality of network paths includes a first set of sub-paths between the set of system ports and the first set of adjacent device ports, and a second set of sub-paths between the second set of adjacent device ports and the at least one of the plurality of remote devices.

In some embodiments, the topology discovery logic is further configured to connect to a distributed database, store at least one of the local path data or the global network path data in the distributed database, and retrieve the remote path data from the distributed database.

In some embodiments, the distributed database is synchronized with the plurality of remote devices.

In some embodiments, the plurality of adjacent devices include at least one spine switch and the plurality of remote devices include at least one leaf switch connected to the at least one spine switch.

In some embodiments, a topology discovery logic is configured to detect an adjacent device connected to a system port, generate local path data associated with the adjacent device, retrieve remote path data associated with a plurality of remote devices, determine, based on the remote path data, at least one of the plurality of remote devices connected to the adjacent device, and generate, based on the local path data and the remote path data, a plurality of network paths connecting to the at least one of the plurality of remote devices.

In some embodiments, the local path data includes at least one of an adjacent device identifier associated with the adjacent device, a system port identifier associated with the system port, or an adjacent device port identifier associated with an adjacent device port of the adjacent device connected to the system port.

In some embodiments, the topology discovery logic is further configured to retrieve, from the remote path data, at least one remote device identifier associated with the at least one of the plurality of remote devices.

In some embodiments, the topology discovery logic is further configured to identify a set of adjacent device ports of the adjacent device connected to the at least one of the plurality of remote devices, and determine a set of adjacent device port identifiers associated with the set of adjacent device ports.

In some embodiments, a method includes detecting one or more adjacent devices, determining at least one remote device connected to the one or more adjacent devices, and generating a plurality of network paths connecting to the at least one remote device. The other methods and devices described herein may be implemented in a network with one or more adjacent devices.

In some embodiments, a method includes: detecting a plurality of adjacent devices; retrieving remote path data associated with a plurality of remote devices; and identifying, based on the remote path data, at least one of the plurality of remote devices connected to at least one of the plurality of adjacent devices.

In some embodiments, a method includes: detecting an adjacent device connected to a system port; generating local path data associated with the adjacent device; retrieving remote path data associated with a plurality of remote devices; determining, based on the remote path data, at least one of the plurality of remote devices connected to the adjacent device; and generating, based on the local path data and the remote path data, a plurality of network paths connecting to the at least one of the plurality of remote devices.

In some embodiments, apparatus comprising means to implement each of the steps set out in the methods described above or in the accompanying claims are contemplated. Moreover, also contemplated is a computer program, computer program product or computer readable medium comprising instructions which, when executed by a computer, cause the computer to carry out the steps of any of the methods set out above or in any of the accompanying method claims.

Other objects, advantages, novel features, and further scope of applicability of the present disclosure will be set forth in part in the detailed description to follow, and in part will become apparent to those skilled in the art upon examination of the following or may be learned by practice of the disclosure. Although the description above contains many specificities, these should not be construed as limiting the scope of the disclosure but as merely providing illustrations of some of the presently preferred embodiments of the disclosure. As such, various other embodiments are possible within its scope. Accordingly, the scope of the disclosure should be determined not by the embodiments illustrated, but by the appended claims and their equivalents.

### BRIEF DESCRIPTION OF DRAWINGS

The above, and other, aspects, features, and advantages of several embodiments of the present disclosure will be more apparent from the following description as presented in conjunction with the following several figures of the drawings.
FIG. 1 is a conceptual illustration of a network illustrating a leaf-spine fabric, in accordance with various embodiments of the disclosure;
FIG. 2 is a conceptual illustration of a network illustrating a leaf-spine fabric, in accordance with various embodiments of the disclosure;
FIG. 3 is a conceptual illustration of a network illustrating a global fabric topology, in accordance with various embodiments of the disclosure;
FIG. 4 is a schematic block diagram of an example architecture for a network fabric, in accordance with various embodiments of the disclosure;
FIG. 5 is a flowchart depicting a process for identifying one or more reachable remote devices, in accordance with various embodiments of the disclosure;
FIG. 6 is a flowchart depicting a process for generating and synchronizing local path data, in accordance with various embodiments of the disclosure;
FIG. 7 is a flowchart depicting a process for generating one or more network paths associated with at least one of the plurality of remote devices, in accordance with various embodiments of the disclosure;
FIG. 8 is a flowchart depicting a process for transmitting local path data, in accordance with various embodiments of the disclosure; and
FIG. 9 is a conceptual block diagram of a device suitable for configuration with a topology discovery logic, in accordance with various embodiments of the disclosure.

Corresponding reference characters indicate corresponding components throughout the several figures of the drawings. Elements in the several figures are illustrated for simplicity and clarity and have not necessarily been drawn to scale. For example, the dimensions of some of the elements in the figures might be emphasized relative to other elements for facilitating understanding of the various presently disclosed embodiments. In addition, common, but well-understood, elements that are useful or necessary in a commercially feasible embodiment are often not depicted in order to facilitate a less obstructed view of these various embodiments of the present disclosure.

### DETAILED DESCRIPTION

In response to the issues described above, devices and methods are discussed herein that provide discovering a global fabric topology in a Disaggregated Scheduled Fabric (DSF). In many embodiments, the DSF may include numerous network devices such as but not limited to spine switches or leaf switches, for example. A plurality of spine and leaf switches can be connected in a leaf-spine topology, *i.e.,* a leaf-spine fabric. The leaf switches may include Top-Of-Rack (TOR) switches or End of Row (EOR) switches etc., for example. Multiple TOR switches and one or more spine switches can be connected in a mesh topology. The TOR switches may be deployed at an edge of a network, near servers, storage arrays, and other network devices such as but not limited to application servers or virtual machines etc. for example. The TOR switches can be connected to the host devices directly or indirectly. The TOR switches may also facilitate Virtual Local Area Network (VLAN) tagging, routing protocols, access control lists, or Quality of Service (QoS) etc., for example.

In a number of embodiments, the DSF may include one or more clusters. Each cluster can include multiple network devices, *i.e.,* spine switches and leaf switches. The network devices may utilize one or more fabric protocols to exchange control messages or forward data traffic among the network devices. In some embodiments, the fabric protocol can facilitate discovery of a fabric topology, establishment of one or more fabric links between the network devices in the cluster, registration of the network devices etc., for example. In certain embodiments, for example, the discovery of the fabric links can be implemented on the network devices in a distributed manner. In more embodiments, for example, each cluster may include an instance of a controller, such as but not limited to Application Policy Infrastructure Controller (APIC). In some more embodiments, the cluster may be in communication with a cloud controller to initialize and/or discover the fabric links. The network devices can also utilize the fabric protocols to determine one or more fabric link parameters, such as but not limited to bandwidth, latency, operational status, congestion, jitter, QoS, or packet loss, etc. for example. In numerous embodiments, the network devices can dynamically monitor operational statuses of the fabric links. The network devices may generate dynamic status data indicative of the operational statuses of the fabric links, and store the dynamic status data in a memory. The network devices can update the dynamic status data periodically and/or dynamically. The network devices may constantly monitor the fabric links to detect dynamic events, such as addition of new network devices and/or to detect failure of any existing fabric link, for example. Thereafter, the network devices may update the dynamic status data based on the detected dynamic events.

In various embodiments, the leaf switches in the DSF can include multiple system ports such as network facing ports connected to the host devices and fabric facing ports connected to the spine switches. Each leaf switch may implement a topology discovery logic. In that, the leaf switch may, for each system port, detect an adjacent device connected to the system port. In some embodiments, for example, the system port can be a fabric facing port and the adjacent device can be a spine switch connected to the fabric facing port. In operation, the leaf switch can discover multiple adjacent devices connected to the multiple system ports. In that, the leaf switch can detect multiple spine switches connected to multiple fabric facing ports. The leaf switch can also determine system port identifiers associated with the system ports. In certain embodiments, the system port identifiers can include but are not limited to port numbers, types of ports, or protocols associated to the ports, etc., for example. The leaf switch may also determine adjacent device identifiers associated with the adjacent devices. In more embodiments, the adjacent device identifiers can include but are not limited to device numbers, switch identifiers (switch IDs), device names or device types, etc., for example. In some more embodiments, for example, the adjacent device identifiers may include Media Access Control (MAC) addresses or Internet Protocol (IP) addresses associated with the adjacent devices.

In additional embodiments, the leaf switch can also identify adjacent device ports of the adjacent devices that are connected to the system ports. In that, the leaf switch can map each system port to the adjacent device port that is connected to the system port. The leaf switch may also determine adjacent device port identifiers associated with the adjacent device ports. In some more embodiments, the adjacent device port identifiers can include but are not limited to port numbers, types of ports, or protocols associated with the adjacent device ports, etc., for example. The leaf switch can determine, based on the mapping between the system ports and corresponding adjacent device ports, the fabric links or paths connecting to the adjacent devices. The leaf switch can generate local path data indicative of the paths connecting to the adjacent devices. In that, the mapping may be indicative of the fabric facing ports and corresponding spine switch ports of the spine switches that are connected to the fabric facing ports. In numerous embodiments, for example, the local path data may include one or more of: the system port identifiers, the adjacent device identifiers, the adjacent device port identifiers, or the mapping between the system ports and the adjacent device ports etc. indicative of the fabric paths between the leaf switch and the spine switches connected to the leaf switch. In still more embodiments, the leaf switch can generate the local path data for each system port. In many further embodiments, the local path data can be indicative of adjacent device information or adjacent peer topology comprising information about the fabric links connecting to the adjacent devices.

In further embodiments, the leaf switch may store the local path data in a distributed database. In some embodiments, examples of the distributed database can include open-source data structure stores such as Redis database. In that, each leaf switch in the DSF can store and update an instance of the distributed database. The distributed database may be dynamically synchronized among the leaf nodes in the DSF. By way of the distributed database, the leaf switch can receive remote path data associated with one or more remote leaf switches. In some embodiments, the remote leaf switches can be the leaf switches that are connected through one or more hops. In some more embodiments, the remote path data can be indicative of the adjacent peer topologies of the remote leaf switches. The leaf switch can retrieve, based on the remote path data, the remote device identifiers of the remote leaf switches and corresponding adjacent peer topologies of the remote leaf switches.

In many more embodiments, the leaf switch can determine one or more reachable remote leaf switches, *i.e*., one or more remote leaf switches that are connected to one or more adjacent devices. In some embodiments, for example, the leaf switch and the one or more reachable remote leaf switches may be connected to the same spine switch. Hence, the reachable remote leaf switches can be in communication with the leaf switch by way of the spine switch. The leaf switch may determine, based on the local path data and the remote path data, one or more network paths connecting to the remote leaf switches. In that, the network paths can include a first set of sub-paths between the leaf switch and the spine switches and a second set of sub-paths between the spine switches and the remote leaf switches. For each remote leaf switch, there may exist one or more than one network paths by way of one or more than one spine switches. The leaf switch can generate the global network path data indicative of the network paths. In certain embodiments, for example, the leaf switch may store the global network path data in a memory within the leaf switch. In more embodiments, for example, the leaf switch can store the global network path data in the distributed database.

In many additional embodiments, the leaf switch can establish one or more communication sessions with the remote leaf switches. In some embodiments, for example, the communication sessions can be in-band communication sessions. In certain embodiments, for example, the communication sessions may be internal Border Gateway Protocol (iBGP) sessions. In more embodiments, the leaf switch can transmit the local path data to the remote leaf switches by way of one or more update messages, such as iBGP update messages. In some more embodiments, the leaf switch can receive the remote path data from the remote leaf switches by way of the iBGP update messages.

Advantageously, the global network path data, *i.e.,* the network paths can be utilized to trace packet paths between the leaf switches. The global network path data may also be utilized to determine network performance metrics such as latency, packet loss, or throughput etc. for example. The global network path data can also facilitate monitoring the network paths or monitoring operational statuses of the network paths. The global network path data can also facilitate monitoring the performance metrics of the fabric links such as packet loss, bandwidth, jitter, congestion, or latency etc. for example. The global network path data may also facilitate in determining reachability between the leaf switches in the DSF.

Aspects of the present disclosure may be embodied as an apparatus, system, method, or computer program product. Accordingly, aspects of the present disclosure may take the form of an entirely hardware embodiment, an entirely software embodiment (including firmware, resident software, micro-code, or the like) or an embodiment combining software and hardware aspects that may all generally be referred to herein as a "function," "module," "apparatus," or "system.". Furthermore, aspects of the present disclosure may take the form of a computer program product embodied in one or more non-transitory computer-readable storage media storing computer-readable and/or executable program code. Many of the functional units described in this specification have been labeled as functions, in order to emphasize their implementation independence more particularly. For example, a function may be implemented as a hardware circuit comprising custom VLSI circuits or gate arrays, off-the-shelf semiconductors such as logic chips, transistors, or other discrete components. A function may also be implemented in programmable hardware devices such as via field programmable gate arrays, programmable array logic, programmable logic devices, or the like.

Functions may also be implemented at least partially in software for execution by various types of processors. An identified function of executable code may, for instance, comprise one or more physical or logical blocks of computer instructions that may, for instance, be organized as an object, procedure, or function. Nevertheless, the executables of an identified function need not be physically located together but may comprise disparate instructions stored in different locations which, when joined logically together, comprise the function and achieve the stated purpose for the function.

Indeed, a function of executable code may include a single instruction, or many instructions, and may even be distributed over several different code segments, among different programs, across several storage devices, or the like. Where a function or portions of a function are implemented in software, the software portions may be stored on one or more computer-readable and/or executable storage media. Any combination of one or more computer-readable storage media may be utilized. A computer-readable storage medium may include, for example, but not limited to, an electronic, magnetic, optical, electromagnetic, infrared, or semiconductor system, apparatus, or device, or any suitable combination of the foregoing, but would not include propagating signals. In the context of this document, a computer readable and/or executable storage medium may be any tangible and/or non-transitory medium that may contain or store a program for use by or in connection with an instruction execution system, apparatus, processor, or device.

Computer program code for carrying out operations for aspects of the present disclosure may be written in any combination of one or more programming languages, including an object-oriented programming language such as Python, Java, Smalltalk, C++, C#, Objective C, or the like, conventional procedural programming languages, such as the "C" programming language, scripting programming languages, and/or other similar programming languages. The program code may execute partly or entirely on one or more of a user's computer and/or on a remote computer or server over a data network or the like.

A component, as used herein, comprises a tangible, physical, non-transitory device. For example, a component may be implemented as a hardware logic circuit comprising custom VLSI circuits, gate arrays, or other integrated circuits; off-the-shelf semiconductors such as logic chips, transistors, or other discrete devices; and/or other mechanical or electrical devices. A component may also be implemented in programmable hardware devices such as field programmable gate arrays, programmable array logic, programmable logic devices, or the like. A component may comprise one or more silicon integrated circuit devices (e.g., chips, die, die planes, packages) or other discrete electrical devices, in electrical communication with one or more other components through electrical lines of a printed circuit board (PCB) or the like. Each of the functions and/or modules described herein, in certain embodiments, may alternatively be embodied by or implemented as a component.

A circuit, as used herein, comprises a set of one or more electrical and/or electronic components providing one or more pathways for electrical current. In certain embodiments, a circuit may include a return pathway for electrical current, so that the circuit is a closed loop. In another embodiment, however, a set of components that does not include a return pathway for electrical current may be referred to as a circuit (e.g., an open loop). For example, an integrated circuit may be referred to as a circuit regardless of whether the integrated circuit is coupled to ground (as a return pathway for electrical current) or not. In various embodiments, a circuit may include a portion of an integrated circuit, an integrated circuit, a set of integrated circuits, a set of non-integrated electrical and/or electrical components with or without integrated circuit devices, or the like. In one embodiment, a circuit may include custom VLSI circuits, gate arrays, logic circuits, or other integrated circuits; off-the-shelf semiconductors such as logic chips, transistors, or other discrete devices; and/or other mechanical or electrical devices. A circuit may also be implemented as a synthesized circuit in a programmable hardware device such as field programmable gate array, programmable array logic, programmable logic device, or the like (e.g., as firmware, a netlist, or the like). A circuit may comprise one or more silicon integrated circuit devices (e.g., chips, die, die planes, packages) or other discrete electrical devices, in electrical communication with one or more other components through electrical lines of a printed circuit board (PCB) or the like. Each of the functions and/or modules described herein, in certain embodiments, may be embodied by or implemented as a circuit.

Reference throughout this specification to "one embodiment," "an embodiment," or similar language means that a feature, structure, or characteristic described in connection with the embodiment is included in at least one embodiment of the present disclosure. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to", unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise.

Further, as used herein, reference to reading, writing, storing, buffering, and/or transferring data can include the entirety of the data, a portion of the data, a set of the data, and/or a subset of the data. Likewise, reference to reading, writing, storing, buffering, and/or transferring non-host data can include the entirety of the non-host data, a portion of the non-host data, a set of the non-host data, and/or a subset of the non-host data.

Lastly, the terms "or" and "and/or" as used herein are to be interpreted as inclusive or meaning any one or any combination. Therefore, "A, B or C" or "A, B and/or C" mean "any of the following: A; B; C; A and B; A and C; B and C; A, B and C.". An exception to this definition will occur only when a combination of elements, functions, steps, or acts are in some way inherently mutually exclusive.

Aspects of the present disclosure are described below with reference to schematic flowchart diagrams and/ or schematic block diagrams of methods, apparatuses, systems, and computer program products according to embodiments of the disclosure. It will be understood that each block of the schematic flowchart diagrams and/or schematic block diagrams, and combinations of blocks in the schematic flowchart diagrams and/or schematic block diagrams, can be implemented by computer program instructions. These computer program instructions may be provided to a processor of a computer or other programmable data processing apparatus to produce a machine, such that the instructions, which execute via the processor or other programmable data processing apparatus, create means for implementing the functions and/or acts specified in the schematic flowchart diagrams and/or schematic block diagrams block or blocks.

It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated figures. Although various arrow types and line types may be employed in the flowchart and/or block diagrams, they are understood not to limit the scope of the corresponding embodiments. For instance, an arrow may indicate a waiting or monitoring period of unspecified duration between enumerated steps of the depicted embodiment.

In the following detailed description, reference is made to the accompanying drawings, which form a part thereof. The foregoing summary is illustrative only and is not intended to be in any way limiting. In addition to the illustrative aspects, embodiments, and features described above, further aspects, embodiments, and features will become apparent by reference to the drawings and the following detailed description. The description of elements in each figure may refer to elements of proceeding figures. Like numbers may refer to like elements in the figures, including alternate embodiments of like elements.

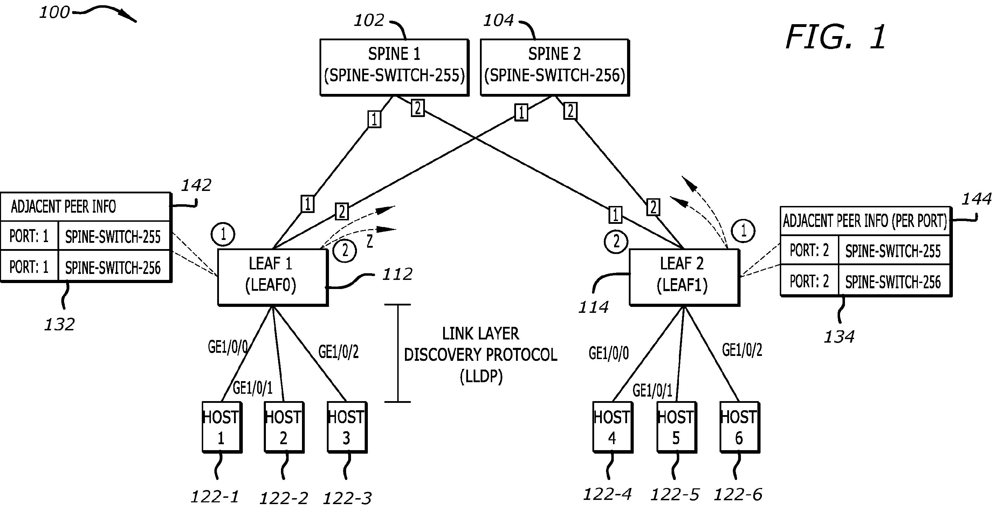

Referring to FIG. 1, a conceptual illustration of a network 100 illustrating a leaf-spine fabric, in accordance with various embodiments of the disclosure is shown. In many embodiments, the network 100 may comprise a first spine switch 102, a second spine switch 104, a first leaf switch 112, a second leaf switch 114, first through third host devices 122-1 to 122-3 connected to the first leaf switch 112, and fourth through sixth host devices 122-4 to 122-6 connected to the second leaf switch 114. The leaf-spine fabric can be a Disaggregated Scheduled Fabric (DSF).

In a number of embodiments, the first leaf switch 112 can be associated with a first leaf switch identifier LEAF0. A first port of the first leaf switch 112 may be connected to a first port of the first spine switch 102 and a second port of the first leaf switch 112 may be connected to a first port of the second spine switch 104. The first leaf switch 112 can utilize a fabric discovery protocol to connect and discover adjacent devices, including the first spine switch 102 and the second spine switch 104. The first leaf switch 112 may determine a first spine switch identifier 255 associated with the first spine switch 102 and a second spine switch identifier 256 associated with the second spine switch 104. The first leaf switch 112 can also discover the first through third host devices 122-1 to 122-3 by way of Link Layer Discovery Protocol (LLDP). In some embodiments, the first leaf switch 112 can be connected to the first spine switch 102 and the second spine switch 104 by way of one or more system ports such as fabric facing system ports. In some more embodiments, the first leaf switch 112 may be connected to the first through third host devices 122-1 to 122-3 by way of one or more system ports such as network facing system ports. The first leaf switch 112 can map the first port to the first port of the first spine switch 102 and can map the second port to the first port of the second spine switch 104. Hence, the first leaf switch 112 may discover two fabric links, *viz,* a first fabric link connecting to the first spine switch 102 and a second fabric link connecting to the second spine switch 104. The first leaf switch 112 can generate first routing data 132 comprising first local path data 142. The first local path data 142 may be indicative of the first fabric link and/or the second fabric link. The first local path data 142 can comprise one or more of: the first leaf switch identifier LEAF0, the first spine switch identifier 255, the second spine switch identifier 256, or a mapping between the system ports of the first leaf switch 112 and adjacent device ports including the ports of the first and second spine switches 102 and 104 etc. for example.

In various embodiments, the second leaf switch 114 can be associated with a second leaf switch identifier LEAF1. A first port of the second leaf switch 114 may be connected to a second port of the first spine switch 102 and a second port of the second leaf switch 114 may be connected to a second port of the second spine switch 104. The second leaf switch 114 can utilize the fabric discovery protocol to connect and discover the adjacent devices, including the first spine switch 102 and the second spine switch 104. The second leaf switch 114 may determine the first spine switch identifier 255 associated with the first spine switch 102 and the second spine switch identifier 256 associated with the second spine switch 104. The second leaf switch 114 can also discover the fourth through sixth host devices 122-4 to 122-6 by way of LLDP. In some embodiments, the second leaf switch 114 can be connected to the first spine switch 102 and the second spine switch 104 by way of one or more system ports such as fabric facing system ports. In some more embodiments, the second leaf switch 114 may be connected to the fourth through sixth host devices 122-4 to 122-6 by way of one or more system ports such as network facing system ports. The second leaf switch 114 can map the first port to the second port of the first spine switch 102 and can map the second port to the second port of the second spine switch 104. Hence, the second leaf switch 114 may discover two fabric links, *viz,* a third fabric link connecting to the first spine switch 102 and a fourth fabric link connecting to the second spine switch 104. The second leaf switch 114 can generate second routing data 134 comprising second local path data 144. The second local path data 144 may be indicative of the third fabric link and/or the fourth fabric link. The second local path data 144 can comprise one or more of: the second leaf switch identifier LEAF1, the first spine switch identifier 255, the second spine switch identifier 256, or a mapping between the system ports of the second leaf switch 114 and the adjacent device ports including the ports of the first and second spine switches 102 and 104 etc. for example.

In additional embodiments, the first leaf switch 112 and the second leaf switch 114 can implement a Switch Abstraction Interface (SAI). At Step 1, the first leaf switch 112 and the second leaf switch 114 may store the first local path data 142 and the second local path data 144 in a distributed database by way of the SAI. The distributed database can be synchronized with a plurality of leaf switches within the network 100, including the first leaf switch 112 and the second leaf switch 114. In some embodiments, each leaf switch in the network 100, including the first leaf switch 112 and the second leaf switch 114 can store an instance of the distributed database. The first leaf switch 112 and the second leaf switch 114 may update the first local path data 142 and the second local path data 144 respectively, periodically and/or dynamically upon detecting changes in a topology of the network 100. The first leaf switch 112 and the second leaf switch 114 may store updated first local path data 142 and updated second local path data 144 in the distributed database. In certain embodiments, the distributed database can be updated by the leaf switches in the network 100 in real-time or near-real time. At Step 2, the first leaf switch 112 can retrieve the second local path data 144 from the distributed database and the second leaf switch 114 can retrieve the first local path data 142 from the distributed database. The first leaf switch 112 and the second leaf switch 114 may determine a global fabric topology based on the first local path data 142 and the second local path data 144.

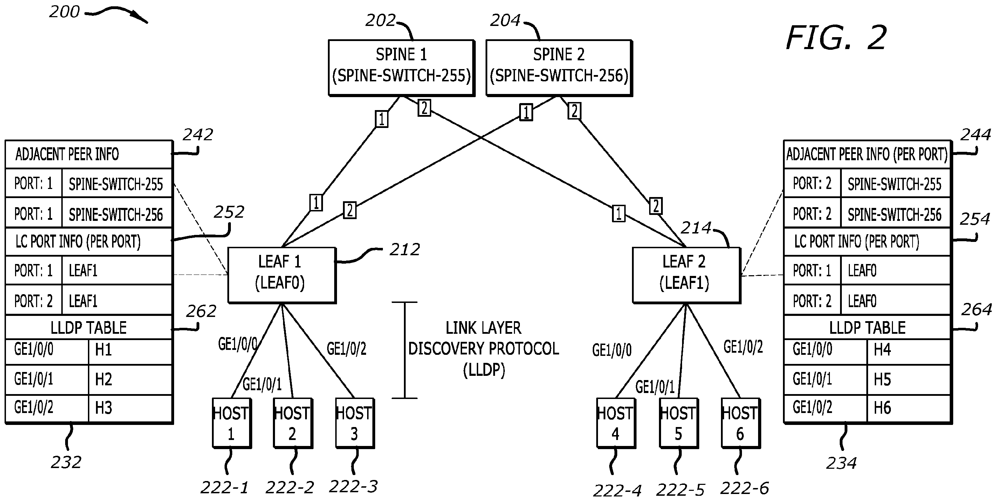

Although a specific embodiment for the network 100 for carrying out the various steps, processes, methods, and operations described herein is discussed with respect to FIG. 1, any of a variety of systems and/or processes may be utilized in accordance with embodiments of the disclosure. For example, the first leaf switch 112 and the second leaf switch 114 can discover one or more fabric links connecting to the plurality of leaf switches in the network 100, thereby generating the global fabric topology. The elements depicted in FIG. 1 may also be interchangeable with other elements of FIGS. 2 - 9 as required to realize a particularly desired embodiment.

Referring to FIG. 2, a conceptual illustration of a network 200 illustrating a leaf-spine fabric, in accordance with various embodiments of the disclosure is shown. In many embodiments, the network 200 can include a first spine switch 202, a second spine switch 204, a first leaf switch 212, a second leaf switch 214, first through third host devices 222-1 to 222-3 connected to the first leaf switch 212, and fourth through sixth host devices 222-4 to 222-6 connected to the second leaf switch 214. The leaf-spine fabric can be the DSF.

In a number of embodiments, the first leaf switch 212 can generate first local path data 242 and store the first local path data 242 in the distributed database. The first leaf switch 212 may discover a first fabric link connecting to a remote device such as the second leaf switch 214, thereby determining the second leaf switch 214 as a reachable leaf switch. The first leaf switch 212 can identify the system ports that can be utilized to communicate with the second leaf switch 214. The first leaf switch 212 can generate first port data 252 indicative of the system ports that can connect to the second leaf switch 214. The first port data 252 may include system port identifiers associated with the system ports. The first leaf switch 212 can discover the first through third host devices 222-1 to 222-3 by way of LLDP. The first leaf switch 212 may generate a first LLDP table 262 and store the first LLDP table 262 in a memory and/or the distributed database. The first leaf switch 212 can store first routing data 232 comprising at least one of: the first local path data 242, the first port data 252, or the first LLDP table 262 in the memory.

In various embodiments, the second leaf switch 214 can generate second local path data 244 and store the second local path data 244 in the distributed database. The second leaf switch 214 may discover a second fabric link connecting to the remote device such as the first leaf switch 212, thereby determining the first leaf switch 212 as the reachable leaf switch. The second leaf switch 214 can identify the system ports that can be utilized to communicate with the first leaf switch 212. The second leaf switch 214 can generate second port data 254 indicative of the system ports that can connect to the first leaf switch 212. The second port data 254 may include system port identifiers associated with the system ports. The second leaf switch 214 can discover the fourth through sixth host devices 222-4 to 222-6 by utilizing LLDP. The second leaf switch 214 may generate second LLDP table 264 and store the second LLDP table 264 in a memory and/or the distributed database. The second leaf switch 214 can store second routing data 234 comprising at least one of: the second local path data 244, the second port data 254, or the second LLDP table 264 in the memory.

Although a specific embodiment for the network 200 for carrying out the various steps, processes, methods, and operations described herein is discussed with respect to FIG. 2, any of a variety of systems and/or processes may be utilized in accordance with embodiments of the disclosure. For example, the first leaf switch 212 and the second leaf switch 214 can store and synchronize the routing data. The elements depicted in FIG. 2 may also be interchangeable with other elements of FIG. 1 and FIGS. 3 - 9 as required to realize a particularly desired embodiment.

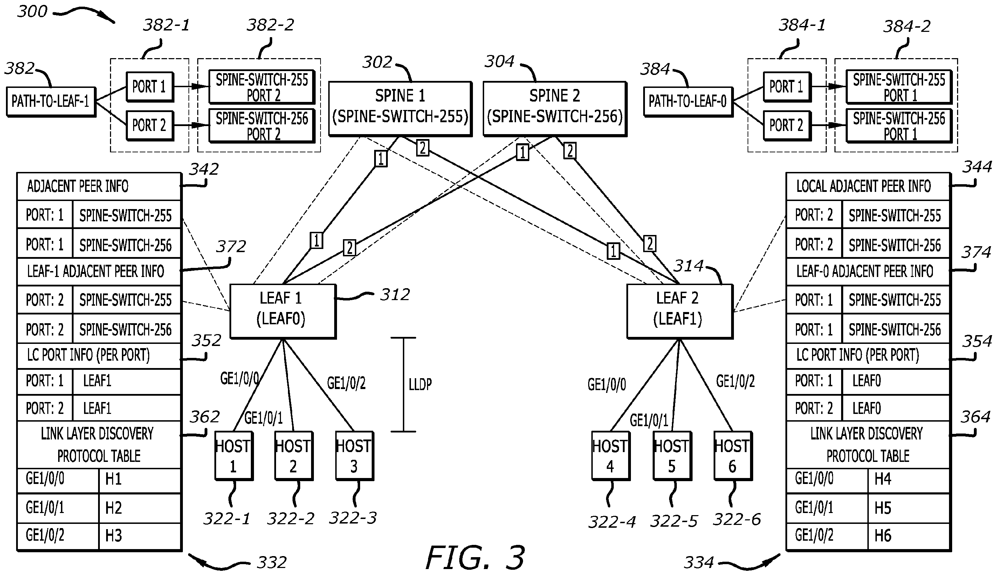

Referring to FIG. 3, a conceptual illustration of a network 300 illustrating a global fabric topology, in accordance with various embodiments of the disclosure is shown. In many embodiments, the network 300 may comprise a first spine switch 302, a second spine switch 304, a first leaf switch 312, a second leaf switch 314, first through third host devices 322-1 to 322-3 connected to the first leaf switch 312, and fourth through sixth host devices 322-4 to 322-6 connected to the second leaf switch 314.

In a number of embodiments, the first leaf switch 312 can store first routing data 332. The first routing data 332 may include first local path data 342, first port data 352, and first LLDP table 362 generated by the first leaf switch 312. The first leaf switch 312 can retrieve, from the distributed database, the first remote path data 372 associated with the second leaf switch 314. The first leaf switch 312 may generate a first network path 382 based on the first routing data 332. The first network path 382 can include a first set of sub-paths 382-1 and a second set of sub-paths 382-2. The first set of sub-paths 382-1 can be indicative of a first sub-path and a second sub-path. The first sub-path may be indicative of a first link that connects a first port of the first leaf switch 312 to a first port of the first spine switch 302. The second sub-path may be indicative of a second link that connects a second port of the first leaf switch 312 to a first port of the second spine switch 304. The second set of sub-paths 382-2 can be indicative of a third sub-path and a fourth sub-path. The third sub-path may be indicative of a third link that connects a second port of the first spine switch 302 to a first port of the second leaf switch 314. The fourth sub-path may be indicative of a fourth link that connects a second port of the second spine switch 304 to a second port of the second leaf switch 314. Thus, the first leaf switch 312 can generate the first network path 382 indicative of one or more fabric links that connect to the second leaf switch 314.

In various embodiments, the second leaf switch 314 can store second routing data 334. The second routing data 334 may include second local path data 344, second port data 354, and second LLDP table 364 generated by the second leaf switch 314. The second leaf switch 314 can retrieve, from the distributed database, the second remote path data 374 associated with the first leaf switch 312. The second leaf switch 314 may generate a second network path 384 based on the second routing data 334. The second network path 384 can include a third set of sub-paths 384-1 and a fourth set of sub-paths 384-2. The third set of sub-paths 384-1 can be indicative of a fifth sub-path and a sixth sub-path. The fifth sub-path may be indicative of a fifth link that connects a first port of the second leaf switch 314 to a second port of the first spine switch 302. The sixth sub-path may be indicative of a sixth link that connects a second port of the second leaf switch 314 to a second port of the second spine switch 304. The fourth set of sub-paths 384-2 can be indicative of a seventh sub-path and an eighth sub-path. The seventh sub-path may be indicative of a seventh link that connects a first port of the first spine switch 302 to a first port of the first leaf switch 312. The eighth sub-path may be indicative of an eighth link that connects a first port of the second spine switch 304 to a second port of the first leaf switch 312. Thus, the second leaf switch 314 can generate the second network path 384 indicative of one or more fabric links that connect to the first leaf switch 312.

In additional embodiments, the first leaf switch 312 can generate first global network path data comprising at least the first network path 382. The first global network path data can further include one or more network paths connecting to a plurality of leaf switches in the network 300. Similarly, the second leaf switch 314 can generate second global network path data comprising at least the second network path 384. The second global network path data can also further include one or more network paths connecting to the plurality of leaf switches in the network 300. Hence, the network 300 can facilitate generation of global network path data indicative of the global fabric topology comprising a plurality of network paths or fabric links in the leaf-spine fabric. The global network path data may be utilized to trace a path through which a packet is forwarded in the leaf-spine fabric. Thereafter, the global network path data can facilitate performing tests or measurements to determine performance metrics of the path. Examples of the performance metrics can include but are not limited to delay, jitter, packet loss, congestion, latency, bandwidth, or utilization etc. associated with the path. The global network path data may also facilitate effective measurement of network performance metrics such as throughput or efficiency etc. for example.

Although a specific embodiment for the network 300 for carrying out the various steps, processes, methods, and operations described herein is discussed with respect to FIG. 3, any of a variety of systems and/or processes may be utilized in accordance with embodiments of the disclosure. For example, the network 300 can facilitate discovering and building the global fabric topology for the DSF. The elements depicted in FIG. 3 may also be interchangeable with other elements of FIGS. 1 - 2 and FIGS. 4 - 9 as required to realize a particularly desired embodiment.

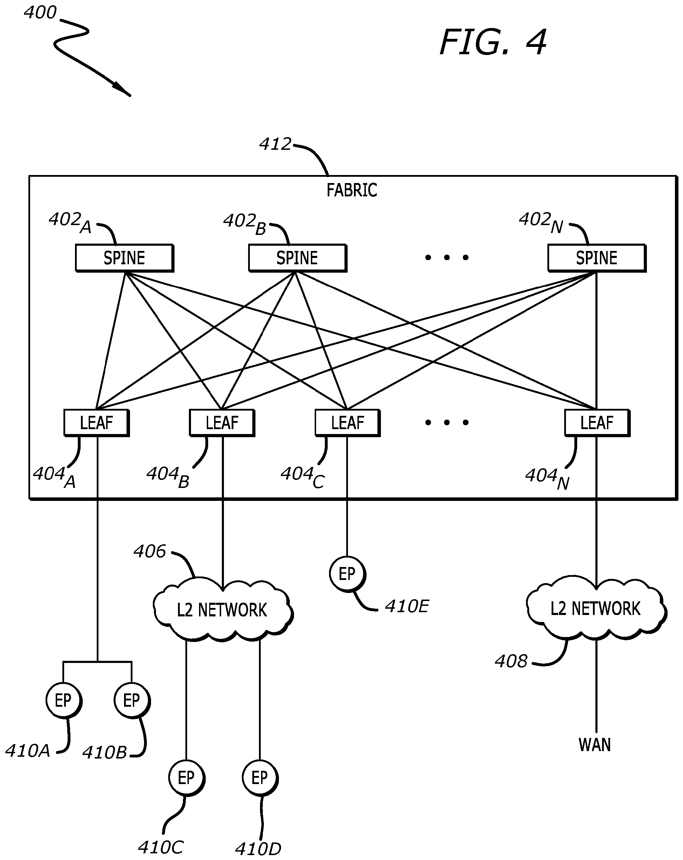

Referring now to FIG. 4, a schematic block diagram of an example architecture 400 for a network fabric 412, in accordance with various embodiments of the disclosure is shown. The network fabric 412 can include spine switches 402 _{A}, 402_{B}, ... , 402_{N} (collectively "402") connected to leaf switches 404 _{A}, 404 _{B}, 404 _{C} . . . 404 _{N} (collectively "404") in the network fabric 412. As those skilled in the art will recognize, networking fabric can refer to a high-speed, high-bandwidth interconnect system that enables multiple devices to communicate with each other efficiently and reliably. It is a network topology that is designed to provide a flexible and scalable infrastructure for data center, cloud environments, and other network elements.

Various embodiments described herein can include a leaf-spine architecture comprising a plurality of spine switches and leaf switches. Spine switches 402 can be L3 switches in the fabric 412. However, in some cases, the spine switches 402 can also, or otherwise, perform L2 functionalities. Further, the spine switches 402 can support various capabilities, such as, but not limited to, 40 or 10 Gbps Ethernet speeds. To this end, the spine switches 402 can be configured with one or more 40 Gigabit Ethernet ports. In certain embodiments, each port can also be split to support other speeds. For example, a 40 Gigabit Ethernet port can be split into four 10 Gigabit Ethernet ports, although a variety of other combinations are available.

In many embodiments, one or more of the spine switches 402 can be configured to host a proxy function that performs a lookup of the endpoint address identifier to locator mapping in a mapping database on behalf of leaf switches 404 that do not have such mapping. The proxy function can do this by parsing through the packet to the encapsulated tenant packet to get to the destination locator address of the tenant. The spine switches 402 can then perform a lookup of their local mapping database to determine the correct locator address of the packet and forward the packet to the locator address without changing certain fields in the header of the packet.

In various embodiments, when a packet is received at a spine switch 402*ᵢ* , wherein subscript "i" indicates that this operation may occur at any spine switch 402_{A} to 402_{N}, the spine switch 402*ᵢ* can first check if the destination locator address is a proxy address. If so, the spine switch 402*ᵢ* can perform the proxy function as previously mentioned. If not, the spine switch 402*ᵢ* can look up the locator in its forwarding table and forward the packet accordingly.

In a number of embodiments, one or more spine switches 402 can connect to one or more leaf switches 404 within the fabric 412. Leaf switches 404 can include access ports (or non-fabric ports) and fabric ports. Fabric ports can provide uplinks to the spine switches 402, while access ports can provide connectivity for devices, hosts, endpoints, VMs, or external networks to the fabric 412.

In more embodiments, leaf switches 404 can reside at the edge of the fabric 412, and can thus represent the physical network edge. In some cases, the leaf switches 404 can be top-of-rack ("ToR") switches configured according to a ToR architecture. In other cases, the leaf switches 404 can be aggregation switches in any particular topology, such as end-of-row (EoR) or middle-of-row (MoR) topologies. The leaf switches 404 can also represent aggregation switches, for example.

In additional embodiments, the leaf switches 404 can be responsible for routing and/or bridging various packets and applying network policies. In some cases, a leaf switch can perform one or more additional functions, such as implementing a mapping cache, sending packets to the proxy function when there is a miss in the cache, encapsulate packets, enforce ingress or egress policies, etc. Moreover, the leaf switches 404 can contain virtual switching functionalities, such as a virtual tunnel endpoint (VTEP) function. To this end, leaf switches 404 can connect the fabric 412 to an overlay network.

In further embodiments, network connectivity in the fabric 412 can flow through the leaf switches 404. Here, the leaf switches 404 can provide servers, resources, endpoints, external networks, or VMs access to the fabric 412, and can connect the leaf switches 404 to each other. In some cases, the leaf switches 404 can connect endpoint groups to the fabric 412 and/or any external networks. Each endpoint group can connect to the fabric 412 via one of the leaf switches 404, for example.

Endpoints 410 A - E (collectively "410", shown as "EP") can connect to the fabric 412 via leaf switches 404. For example, endpoints 410A and 410B can connect directly to leaf switch 404A, which can connect endpoints 410A and 410B to the fabric 412 and/or any other one of the leaf switches 404. Similarly, endpoint 410E can connect directly to leaf switch 404C, which can connect endpoint 410E to the fabric 412 and/or any other of the leaf switches 404. On the other hand, endpoints 410C and 410D can connect to leaf switch 404B via L2 network 406. Similarly, the wide area network (WAN) can connect to the leaf switches 404C or 404D via L3 network 408.

In certain embodiments, endpoints 410 can include any communication device, such as a computer, a server, a switch, a router, etc. In some cases, the endpoints 410 can include a server, hypervisor, or switch configured with a VTEP functionality which connects an overlay network, with the fabric 412. The overlay network can host physical devices, such as servers, applications, endpoint groups, virtual segments, virtual workloads, etc. In addition, the endpoints 410 can host virtual workload(s), clusters, and applications or services, which can connect with the fabric 412 or any other device or network, including an external network. For example, one or more endpoints 410 can host, or connect to, a cluster of load balancers or an endpoint group of various applications.

Although a specific embodiment for an architecture 400 is described above with respect to FIG. 4, any of a variety of systems and/or processes may be utilized in accordance with embodiments of the disclosure. For example, the architecture 400 could comprise any variety of endpoints, spine switches, and/or leaf switches. The elements depicted in FIG. 4 may also be interchangeable with other elements of FIGS. 1 - 3 and 5 - 9 as required to realize a particularly desired embodiment.

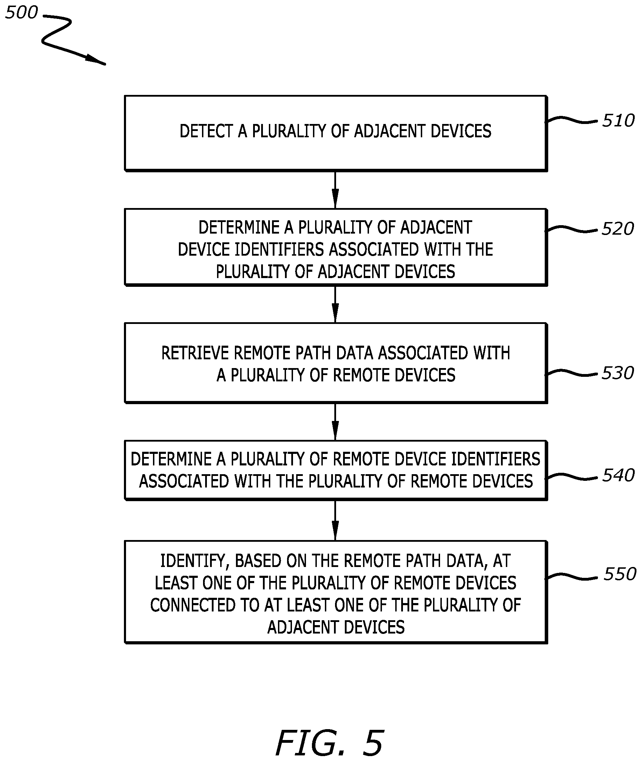

Referring now to FIG. 5, a flowchart depicting a process 500 for identifying one or more reachable remote devices, in accordance with various embodiments of the disclosure is shown. In many embodiments, the process 500 can detect a plurality of adjacent devices (block 510). In some embodiments, the process 500 may be implemented by at least one leaf switch in the DSF. In certain embodiments, the plurality of adjacent devices may include at least one spine switch connected to the leaf switch. In more embodiments, the spine and leaf switches in the DSF can be connected in the mesh topology. In some more embodiments, the process 500 can utilize the fabric discovery protocol, such as but not limited to LLDP or Cisco Discovery Protocol (CDP) etc. for example, for detecting the adjacent devices.

In a number of embodiments, the process 500 may determine a plurality of adjacent device identifiers associated with the plurality of adjacent devices (block 520). In some embodiments, the process 500 can determine spine switch identifiers or switch IDs associated with the spine switches. In certain embodiments, the process 500 may determine Media Access Control (MAC) addresses or Internet Protocol (IP) addresses associated with the spine switches. In more embodiments, the process 500 can determine types of the adjacent devices, host names, device names, protocols associated with the adjacent devices, etc. In some more embodiments, the process 500 may discover the links connecting to the spine switches.

In various embodiments, the process 500 can retrieve the remote path data associated with a plurality of remote devices (block 530). In some embodiments, the plurality of remote devices may include at least one remote leaf switch. In certain embodiments, the process 500 can access the distributed database and retrieve the remote path data associated with the remote leaf switch. In more embodiments, the remote path data can be indicative of one or more spine switches connected to the remote leaf switch.

In additional embodiments, the process 500 may determine a plurality of remote device identifiers associated with the plurality of remote devices (block 540). In some embodiments, the process 500 can determine the leaf switch identifiers associated with the remote leaf switches. In certain embodiments, the remote device identifiers may include the switch IDs, the MAC addresses, or the IP addresses associated with the leaf switches. In more embodiments, the process 500 can discover the links between the spine switches and the reachable leaf switches.

In further embodiments, the process 500 can identify, based on the remote path data, at least one of the plurality of remote devices connected to at least one of the plurality of adjacent devices (block 550). In some embodiments, the process 500 may identify the remote leaf switches that can be reachable by the process 500 by way of the adjacent devices. In certain embodiments, the process 500 can discover the network paths connecting to the reachable remote leaf switches.

Although a specific embodiment for the process 500 for identifying the reachable remote devices for carrying out the various steps, processes, methods, and operations described herein is discussed with respect to FIG. 5, any of a variety of systems and/or processes may be utilized in accordance with embodiments of the disclosure. For example, the process 500 may discover the networks paths associated with the leaf switches. The elements depicted in FIG. 5 may also be interchangeable with other elements of FIGS. 1 - 4 and FIGS. 6 - 9 as required to realize a particularly desired embodiment.

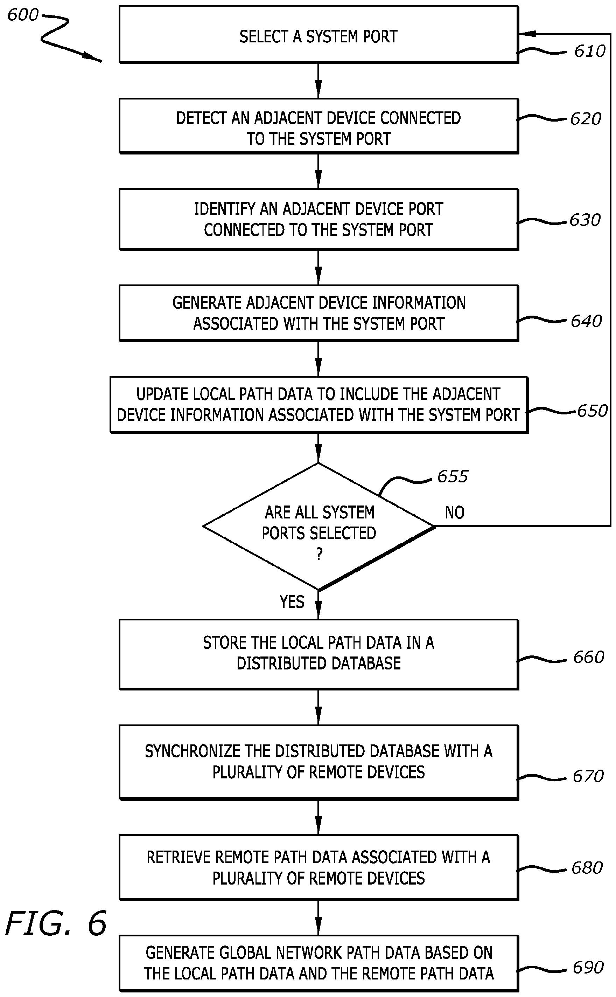

Referring now to FIG. 6, a flowchart depicting a process 600 for generating and synchronizing the local path data, in accordance with various embodiments of the disclosure is shown. In many embodiments, the process 600 can select a system port (block 610). In some embodiments, the process 600 may be implemented by the leaf switch in the DSF. In certain embodiments, the leaf switch can include the fabric facing ports connected to the spine switches and the network facing ports connected to the host devices. In more embodiments, the process 600 can select one of the fabric facing ports connected to one of the spine switches.

In a number of embodiments, the process 600 may detect the adj acent device connected to the system port (block 620). In some embodiments, the process 600 can detect the spine switch connected to the selected fabric facing port. In more embodiments, the process 600 may determine the adjacent device identifier associated with the adjacent device. In some more embodiments, the process 600 can discover the link connecting to the spine switch.

In various embodiments, the process 600 can identify an adj acent device port connected to the system port (block 630). In some embodiments, the process 600 may determine an adjacent device port identifier associated with the adjacent device. In certain embodiments, for example, the process 600 can determine a port number of a spine switch port of the spine switch connected to the system port. In more embodiments, the process 600 may map the system port with the port number of the spine switch port.

In additional embodiments, the process 600 may generate adjacent device information associated with the system port (block 640). In some embodiments, the process 600 can determine device type, port type, or protocol, etc. associated with the adjacent device. In certain embodiments, the adjacent device information can be indicative of one or more of: the adjacent device identifier, the system port identifier, or the adjacent device port identifier etc. In more embodiments, the adjacent device information may be indicative of the link connecting to the adjacent device. In some more embodiments, the process 600 can generate the adjacent device information for each system port.

In further embodiments, the process 600 can update the local path data to include the adjacent device information associated with the system port (block 650). In some embodiments, the local path data can include the adjacent device information associated with all fabric facing ports that are connected to the spine switches. In certain embodiments, the process 600 may update the local path data periodically or dynamically based on changes in the network topology. In more embodiments, the process 600 can update the local path data to indicate the operational status, such as active, inactive, or failed etc. of the links. The some more embodiments, the local path data can be updated in real-time or near-real time upon addition of network devices in the DSF and/or upon failure of any links etc. for example.

In many more embodiments, the process 600 may check if all the system ports are selected (block 655). In some embodiments, the process 600 can ensure that all the adjacent devices connected to the leaf switch that implements the process 600 are discovered and identified. In certain embodiments, if at block 655 the process 600 determines that all the system ports are not selected, the process 600 may loop back to block 610 to select the next system port (block 610). In some embodiments, the process 600 can select the next port randomly, or sequentially based on the port numbers associated with the system ports. In certain embodiments, the process 600 may prioritize one or more system ports for selection.

In many additional embodiments, if at block 655 the process 600 determines that all the system ports are selected, the process 600 can store the local path data in the distributed database (block 660). In some embodiments, the local path data may include one or more of: the system port identifiers, the adjacent device identifiers, the adjacent device port identifiers etc. In certain embodiments, the local path data can be indicative of the links between the system ports and the spine switches.

In many further embodiments, the process 600 may synchronize the distributed database with the plurality of remote devices (block 670). In some embodiments, each leaf switch in the DSF can store and update the distributed database. In certain embodiments, examples of the distributed database can include open-source data structure stores such as Redis database.

In still many embodiments, the process 600 can retrieve the remote path data associated with the plurality of remote devices (block 680). In some embodiments, the remote path data can be the local path data generated and stored by the plurality of remote devices. In certain embodiments, the process 600 can identify the reachable remote devices based on the remote path data. In more embodiments, the plurality of remote devices can include at least one leaf switch in the DSF.

In still further embodiments, the process 600 may generate the global network path data based on the local path data and the remote path data (block 690). In some embodiments, the global network path data can be indicative of the network paths between the plurality of leaf switches in the DSF. In certain embodiments, the global network path data can be indicative of the global fabric topology of the DSF.

Although a specific embodiment for the process 600 for generating and synchronizing the local path data for carrying out the various steps, processes, methods, and operations described herein is discussed with respect to FIG. 6, any of a variety of systems and/or processes may be utilized in accordance with embodiments of the disclosure. For example, the process 600 may utilize the port data associated with the plurality of leaf switches to build the global fabric topology. The elements depicted in FIG. 6 may also be interchangeable with other elements of FIGS. 1 - 5 and FIGS. 7 - 9 as required to realize a particularly desired embodiment.

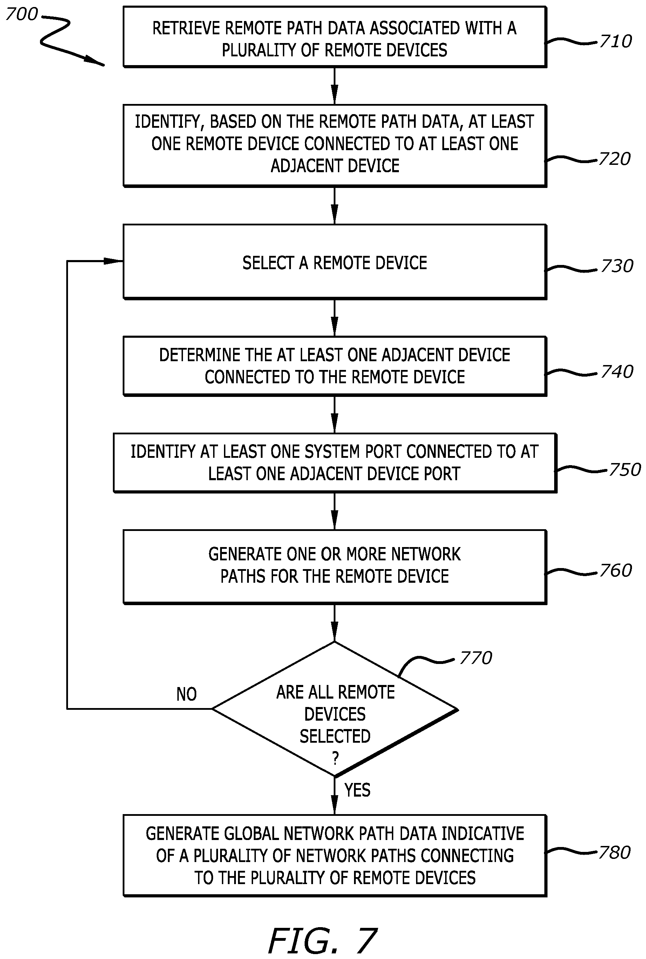

Referring now to FIG. 7, a flowchart depicting a process 700 for generating the network paths associated with the remote devices, in accordance with various embodiments of the disclosure is shown. In many embodiments, the process 700 may retrieve the remote path data associated with the remote devices (block 710). In some embodiments, the process 700 can be implemented by the leaf switch in the DSF. In certain embodiments, the remote devices may include the leaf switches in the DSF. In more embodiments, the remote path data can be indicative of the port data generated by the remote devices and stored in the distributed database.

In a number of embodiments, the process 700 may identify, based on the remote path data, at least one remote device connected to at least one adjacent device (block 720). In some embodiments, the process 700 can identify the leaf switches that are connected to an adjacent spine switch. In certain embodiments, the adjacent spine switch can be connected to one of the system ports of the leaf switch implementing the process 700.

In various embodiments, the process 700 can select one remote device (block 730). In some embodiments, the process 700 may select the remote devices sequentially, randomly, or based on a priority of the remote device. In certain embodiments, the process 700 can determine the remote device identifier associated with the selected remote device.

In additional embodiments, the process 700 may determine the at least one adjacent device connected to the remote device (block 740). In some embodiments, the process 700 can utilize the port data or the remote path data associated with the selected remote device to discover the connections of the selected remote device. In certain embodiments, the process 700 may detect the spine switches that are connected to the selected remote device as well as one or more system ports.

In further embodiments, the process 700 can identify at least one system port connected to at least one adjacent device port (block 750). In some embodiments, the process 700 can map the system ports to the ports of the spine switches connected to the system ports. In certain embodiments, the process 700 may map the system port identifiers with the corresponding adjacent device port identifiers. In more embodiments, a first set of adjacent device ports of the adjacent devices can be connected to a set of system ports and a second set of adjacent device ports of the adjacent devices can be connected to the remote devices. In some more embodiments, the process 700 can determine a set of system port identifiers associated with the set of system ports, a first set of adjacent device port identifiers associated with the first set of adjacent device ports, and a second set of adjacent device port identifiers associated with the second set of adjacent device ports. In numerous embodiments, the process 700 can map the set of system port identifiers with the first set of adjacent device port identifiers. In further embodiments, the process 700 can map the second set of adjacent device port identifiers to the remote device identifiers.

In many more embodiments, the process 700 may generate one or more network paths for the remote device (block 760). In some embodiments, some remote leaf switches can be reachable via more than one spine switches. In certain embodiments, in that case, the process 700 can generate a network path associated with each spine switch that connects to the remote leaf switch. In more embodiments, the process 700 may generate a first set of sub-paths between the set of system ports and the first set of adjacent device ports. In some more embodiments, the process 700 can generate a second set of sub-paths between the second set of adjacent device ports and the remote devices. In numerous embodiments, the network path may include at least one of the first set of sub-paths and at least one of the second set of sub-paths.

In many additional embodiments, the process 700 can check if all the remote devices are selected (block 770). In some embodiments, the process 700 may check if all the leaf switches in a DSF cluster are selected. In more embodiments, the process 700 can also be utilized to generate the network paths for network devices in different DSF clusters.

In many further embodiments, if at block 770 the process 700 determines that all the remote devices are not selected, the process 700 may select the next remote device (block 730). In some embodiments, the next remote device can be a newly added leaf switch in the DSF cluster. In more embodiments, the process 700 can select the next remote device sequentially based on the remote device identifiers, randomly, or based on a priority of the remote device.

In still many embodiments, if at block 770 the process 700 determines that all the remote devices are selected, the process 700 can generate the global network path data indicative of the plurality of network paths connecting to the plurality of remote devices (block 780). In some embodiments, the global network path data can be generated based on the local path data and the remote path data. In certain embodiments, the process 700 can generate the global fabric topology including the plurality of fabric links between the network devices in the DSF.

Although a specific embodiment for the process 700 for generating the network paths associated with the remote devices for carrying out the various steps, processes, methods, and operations described herein is discussed with respect to FIG. 7, any of a variety of systems and/or processes may be utilized in accordance with embodiments of the disclosure. For example, the process 700 may discover, for each remote leaf switch, all the network paths that connect to the remote leaf switch. The elements depicted in FIG. 7 may also be interchangeable with other elements of FIGS. 1 - 6 and FIGS. 8 - 9 as required to realize a particularly desired embodiment.

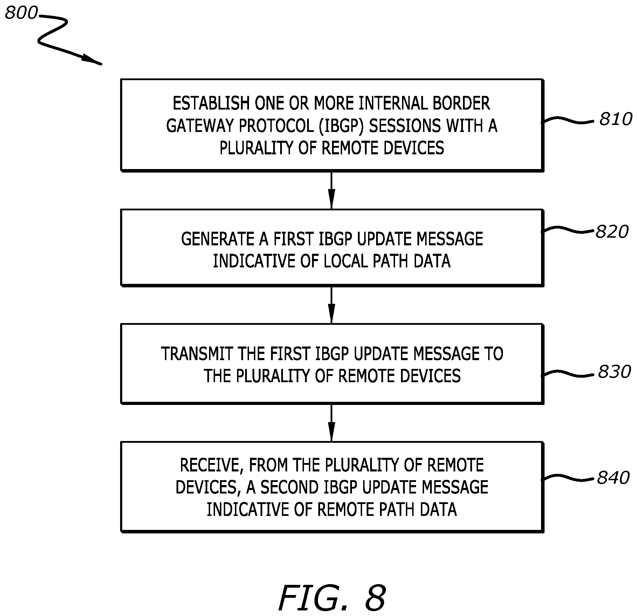

Referring now to FIG. 8, a flowchart depicting a process 800 for transmitting the local path data, in accordance with various embodiments of the disclosure is shown. In many embodiments, the process 800 can establish one or more internal Border Gateway Protocol (iBGP) sessions with the plurality of remote devices (block 810). In some embodiments, the process 800 can establish in-band communication sessions with the remote leaf switches. In certain embodiments, the process 800 can utilize the iBGP sessions to advertise the local path data and/or the adjacent device information to the remote leaf switches. In more embodiments, the local path data, the port data, and/or the adjacent device information may be utilized to encapsulate, forward, or route the packets in the DSF.

In a number of embodiments, the process 800 may generate a first iBGP update message indicative of local path data (block 820). In some embodiments, the first iBGP update message can be indicative of the network paths connecting to the remote leaf switches. In certain embodiments, the first iBGP update message can also be indicative of the port data and/or the adjacent device information generated by the process 800. In more embodiments, the plurality of remote devices can receive and store the local path data and/or the adjacent device information. In some more embodiments, the remote devices may update a routing and/or forwarding table based on the received local path data and/or the adjacent device information.

In various embodiments, the process 800 can transmit the first iBGP update message to the plurality of remote devices (block 830). In some embodiments, the process 800 may transmit the first iBGP update message periodically or dynamically based on changes in the network topology. In certain embodiments, the process 800 can transmit the first iBGP update message upon initialization of one or more network devices in the DSF.

In additional embodiments, the process 800 may receive, from the plurality of remote devices, a second iBGP update message indicative of remote path data (block 840). In some embodiments, the process 800 can store the remote path data. In certain embodiments, the remote path data can be indicative of the port data or the adjacent device information associated with the remote devices. In more embodiments, the process 800 can generate the global network path data based on the local path data and the remote path data.

Although a specific embodiment for the process 800 for transmitting the local path data for carrying out the various steps, processes, methods, and operations described herein is discussed with respect to FIG. 8, any of a variety of systems and/or processes may be utilized in accordance with embodiments of the disclosure. For example, the process 800 may utilize one or more routing protocols to share the local path data with the remote devices. The elements depicted in FIG. 8 may also be interchangeable with other elements of FIGS. 1 - 7 and FIG. 9 as required to realize a particularly desired embodiment.

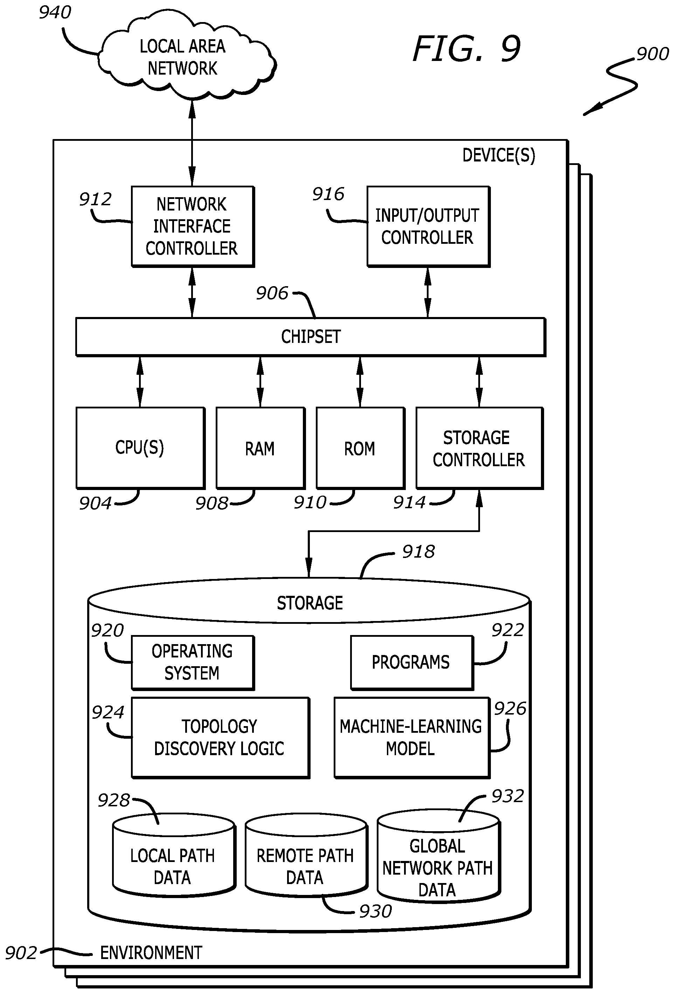

Referring to FIG. 9, a conceptual block diagram of a device 900 suitable for configuration with a topology discovery logic, in accordance with various embodiments of the disclosure is shown. The embodiment of the conceptual block diagram depicted in FIG. 9 can illustrate a conventional server, computer, workstation, desktop computer, laptop, tablet, network appliance, e-reader, smartphone, or other computing device, and can be utilized to execute any of the application and/or logic components presented herein. The embodiment of the conceptual block diagram depicted in FIG. 9 can also illustrate an access point, a switch, or a router in accordance with various embodiments of the disclosure. The device 900 may, in many nonlimiting examples, correspond to physical devices or to virtual resources described herein.

In many embodiments, the device 900 may include an environment 902 such as a baseboard or "motherboard," in physical embodiments that can be configured as a printed circuit board with a multitude of components or devices connected by way of a system bus or other electrical communication paths. Conceptually, in virtualized embodiments, the environment 902 may be a virtual environment that encompasses and executes the remaining components and resources of the device 900. In more embodiments, one or more processors 904, such as, but not limited to, central processing units ("CPUs") can be configured to operate in conjunction with a chipset 906. The processor(s) 904 can be standard programmable CPUs that perform arithmetic and logical operations necessary for the operation of the device 900.

In a number of embodiments, the processor(s) 904 can perform one or more operations by transitioning from one discrete, physical state to the next through the manipulation of switching elements that differentiate between and change these states. Switching elements generally include electronic circuits that maintain one of two binary states, such as flip-flops, and electronic circuits that provide an output state based on the logical combination of the states of one or more other switching elements, such as logic gates. These basic switching elements can be combined to create more complex logic circuits, including registers, adders-subtractors, arithmetic logic units, floating-point units, and the like.

In various embodiments, the chipset 906 may provide an interface between the processor(s) 904 and the remainder of the components and devices within the environment 902. The chipset 906 can provide an interface to a random-access memory ("RAM") 908, which can be used as the main memory in the device 900 in some embodiments. The chipset 906 can further be configured to provide an interface to a computer-readable storage medium such as a read-only memory ("ROM") 910 or non-volatile RAM ("NVRAM") for storing basic routines that can help with various tasks such as, but not limited to, starting up the device 900 and/or transferring information between the various components and devices. The ROM 910 or NVRAM can also store other application components necessary for the operation of the device 900 in accordance with various embodiments described herein.

Additional embodiments of the device 900 can be configured to operate in a networked environment using logical connections to remote computing devices and computer systems through a network, such as the network 940. The chipset 906 can include functionality for providing network connectivity through a network interface card ("NIC") 912, which may comprise a gigabit Ethernet adapter or similar component. The NIC 912 can be capable of connecting the device 900 to other devices over the network 940. It is contemplated that multiple NICs 912 may be present in the device 900, connecting the device to other types of networks and remote systems.

In further embodiments, the device 900 can be connected to a storage 918 that provides non-volatile storage for data accessible by the device 900. The storage 918 can, for instance, store an operating system 920, applications 922, local path data 928, remote path data 930, and global network path data 932 which are described in greater detail below. The storage 918 can be connected to the environment 902 through a storage controller 914 connected to the chipset 906. In certain embodiments, the storage 918 can consist of one or more physical storage units. The storage controller 914 can interface with the physical storage units through a serial attached SCSI ("SAS") interface, a serial advanced technology attachment ("SATA") interface, a fiber channel ("FC") interface, or other type of interface for physically connecting and transferring data between computers and physical storage units. The local path data 928 can be indicative of one or more of: the system port identifiers, the adjacent device identifiers, the adjacent device port identifiers, or mapping between the system port identifiers and the adjacent device port identifiers. The local path data 928 may also include the port data and and/or the adjacent device information. The local path data 928 can be indicative of one or more links connecting to the adjacent devices. The local path data 928 may be indicative of the first set of sub-paths between the device 900 and the spine switches. The remote path data 930 can be indicative of one or more of: the remote device identifiers or the adjacent device port identifiers connected to the remote devices, etc. for example. The remote path data 930 may also include the port data and/or the adjacent device information generated by the remote devices. The remote path data 930 can be indicative of the second set of sub-paths between the spine switches and the remote devices. The global network path data 932 may be indicative of the network paths connecting to the remote devices. The global network path data 932 can be indicative of the global fabric topology. In some embodiments, for example, the adjacent devices can include at least one spine switch in the DSF. In certain embodiments, for example, the remote devices can include at least one leaf switch in the DSF. In more embodiments, the spine switches and the leaf switches may be in same DSF cluster.

The device 900 can store data within the storage 918 by transforming the physical state of the physical storage units to reflect the information being stored. The specific transformation of physical state can depend on various factors. Examples of such factors can include, but are not limited to, the technology used to implement the physical storage units, whether the storage 918 is characterized as primary or secondary storage, and the like.

In many more embodiments, the device 900 can store information within the storage 918 by issuing instructions through the storage controller 914 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit, or the like. Other transformations of physical media are possible without departing from the scope and spirit of the present description, with the foregoing examples provided only to facilitate this description. The device 900 can further read or access information from the storage 918 by detecting the physical states or characteristics of one or more particular locations within the physical storage units.

In addition to the storage 918 described above, the device 900 can have access to other computer-readable storage media to store and retrieve information, such as program modules, data structures, or other data. It should be appreciated by those skilled in the art that computer-readable storage media is any available media that provides for the non-transitory storage of data and that can be accessed by the device 900. In some examples, the operations performed by a cloud computing network, and or any components included therein, may be supported by one or more devices similar to device 900. Stated otherwise, some or all of the operations performed by the cloud computing network, and or any components included therein, may be performed by one or more devices 900 operating in a cloud-based arrangement.

By way of example, and not limitation, computer-readable storage media can include volatile and non-volatile, removable and non-removable media implemented in any method or technology. Computer-readable storage media includes, but is not limited to, RAM, ROM, erasable programmable ROM ("EPROM"), electrically-erasable programmable ROM ("EEPROM"), flash memory or other solid-state memory technology, compact disc ROM ("CD-ROM"), digital versatile disk ("DVD"), high definition DVD ("HD-DVD"), BLU-RAY, or other optical storage, magnetic cassettes, magnetic tape, magnetic disk storage or other magnetic storage devices, or any other medium that can be used to store the desired information in a non-transitory fashion.

As mentioned briefly above, the storage 918 can store an operating system 920 utilized to control the operation of the device 900. According to one embodiment, the operating system comprises the LINUX operating system. According to another embodiment, the operating system comprises the WINDOWS^{®} SERVER operating system from MICROSOFT Corporation of Redmond, Washington. According to further embodiments, the operating system can comprise the UNIX operating system or one of its variants. It should be appreciated that other operating systems can also be utilized. The storage 918 can store other system or application programs and data utilized by the device 900.

In many additional embodiments, the storage 918 or other computer-readable storage media is encoded with computer-executable instructions which, when loaded into the device 900, may transform it from a general-purpose computing system into a special-purpose computer capable of implementing the embodiments described herein. These computer-executable instructions may be stored as application 922 and transform the device 900 by specifying how the processor(s) 904 can transition between states, as described above. In some embodiments, the device 900 has access to computer-readable storage media storing computer-executable instructions which, when executed by the device 900, perform the various processes described above with regard to FIGS. 1 - 8. In certain embodiments, the device 900 can also include computer-readable storage media having instructions stored thereupon for performing any of the other computer-implemented operations described herein.

In many further embodiments, the device 900 may include a topology discovery logic 924. The topology discovery logic 924 can be configured to perform one or more of the various steps, processes, operations, and/or other methods that are described above. Often, the topology discovery logic 924 can be a set of instructions stored within a non-volatile memory that, when executed by the processor(s)/controller(s) 904 can carry out these steps, etc. In some embodiments, the topology discovery logic 924 may be a client application that resides on a network-connected device, such as, but not limited to, a server, switch, personal or mobile computing device in a single or distributed arrangement. The topology discovery logic 924 may generate the global network path data 932, *i.e.,* the global fabric topology based at least on the local path data 928 and the remote path data 930. The global network path data 932 may be indicative of the network paths between the network devices in the DSF.

In still further embodiments, the device 900 can also include one or more input/output controllers 916 for receiving and processing input from a number of input devices, such as a keyboard, a mouse, a touchpad, a touch screen, an electronic stylus, or other type of input device. Similarly, an input/output controller 916 can be configured to provide output to a display, such as a computer monitor, a flat panel display, a digital projector, a printer, or other type of output device. Those skilled in the art will recognize that the device 900 might not include all of the components shown in FIG. 9 and can include other components that are not explicitly shown in FIG. 9 or might utilize an architecture completely different than that shown in FIG. 9.

As described above, the device 900 may support a virtualization layer, such as one or more virtual resources executing on the device 900. In some examples, the virtualization layer may be supported by a hypervisor that provides one or more virtual machines running on the device 900 to perform functions described herein. The virtualization layer may generally support a virtual resource that performs at least a portion of the techniques described herein.

Finally, in numerous additional embodiments, data may be processed into a format usable by a machine-learning model 926 (e.g., feature vectors), and or other pre-processing techniques. The machine-learning ("MI,") model 926 may be any type of ML model, such as supervised models, reinforcement models, and/or unsupervised models. The ML model 926 may include one or more of linear regression models, logistic regression models, decision trees, Naïve Bayes models, neural networks, k-means cluster models, random forest models, and/or other types of ML models 926.

The ML model(s) 926 can be configured to generate inferences to make predictions or draw conclusions from data. An inference can be considered the output of a process of applying a model to new data. This can occur by learning from at least the local path data 928, the remote path data 930, and the global network path data 932 and use that learning to predict future outcomes. These predictions are based on patterns and relationships discovered within the data. To generate an inference, the trained model can take input data and produce a prediction or a decision. The input data can be in various forms, such as images, audio, text, or numerical data, depending on the type of problem the model was trained to solve. The output of the model can also vary depending on the problem, and can be a single number, a probability distribution, a set of labels, a decision about an action to take, etc. Ground truth for the ML model(s) 926 may be generated by human/administrator verifications or may compare predicted outcomes with actual outcomes.

Although a specific embodiment for the device 900 suitable for configuration with the topology discovery logic for carrying out the various steps, processes, methods, and operations described herein is discussed with respect to FIG. 9, any of a variety of systems and/or processes may be utilized in accordance with embodiments of the disclosure. For example, the device 900 may be in a virtual environment such as a cloud-based network administration suite, or it may be distributed across a variety of network devices or switches. The elements depicted in FIG. 9 may also be interchangeable with other elements of FIGS. 1 - 8 as required to realize a particularly desired embodiment.

In summary, devices, networks, systems, methods, and processes for discovering a global fabric topology in a Disaggregated Scheduled Fabric (DSF) are described herein. A leaf switch can detect at least one adjacent spine switch connected to at least one system port. The leaf switch may generate local path data or adjacent device information associated with the at least one adjacent spine switch. The leaf switch can retrieve remote path data and may discover, based on the remote path data, at least one remote leaf switch connected to the at least one adjacent spine switch. The leaf switch can generate one or more network paths connecting to the at least one remote leaf switch. The leaf switch may also generate, based on the local path data and the remote path data, global network path data indictive of a plurality of network paths between a plurality of leaf switches in the DSF.

Although the present disclosure has been described in certain specific aspects, many additional modifications and variations would be apparent to those skilled in the art. In particular, any of the various processes described above can be performed in alternative sequences and/or in parallel (on the same or on different computing devices) in order to achieve similar results in a manner that is more appropriate to the requirements of a specific application. It is therefore to be understood that the present disclosure can be practiced other than specifically described without departing from the scope and spirit of the present disclosure. Thus, embodiments of the present disclosure should be considered in all respects as illustrative and not restrictive. It will be evident to the person skilled in the art to freely combine several or all of the embodiments discussed here as deemed suitable for a specific application of the disclosure. Throughout this disclosure, terms like "advantageous", "exemplary" or "example" indicate elements or dimensions which are particularly suitable (but not essential) to the disclosure or an embodiment thereof and may be modified wherever deemed suitable by the skilled person, except where expressly required. Accordingly, the scope of the disclosure should be determined not by the embodiments illustrated, but by the appended claims and their equivalents.

Any reference to an element being made in the singular is not intended to mean "one and only one" unless explicitly so stated, but rather "one or more." All structural and functional equivalents to the elements of the above-described preferred embodiment and additional embodiments as regarded by those of ordinary skill in the art are hereby expressly incorporated by reference and are intended to be encompassed by the present claims.

Moreover, no requirement exists for a system or method to address each and every problem sought to be resolved by the present disclosure, for solutions to such problems to be encompassed by the present claims. Furthermore, no element, component, or method step in the present disclosure is intended to be dedicated to the public regardless of whether the element, component, or method step is explicitly recited in the claims. Various changes and modifications in form, material, workpiece, and fabrication material detail can be made, without departing from the spirit and scope of the present disclosure, as set forth in the appended claims, as might be apparent to those of ordinary skill in the art, are also encompassed by the present disclosure.

## Claims

1. A method comprising:
detecting a plurality of adjacent devices;
retrieving remote path data associated with a plurality of remote devices; and
identifying, based on the remote path data, at least one of the plurality of remote devices connected to at least one of the plurality of adjacent devices.

2. The method of claim 1, further comprising determining at least one adjacent device identifier associated with the at least one of the plurality of adjacent devices.

3. The method of claim 1 or 2, further comprising identifying a first set of adjacent device ports of the at least one of the plurality of adjacent devices connected to a set of system ports, the method optionally further comprising determining a set of system port identifiers associated with the set of system ports.

4. The method of claim 3, further comprising determining a first set of adjacent device port identifiers associated with the first set of adjacent device ports.

5. The method of any of claims 2 to 4, further comprising generating local path data indicative of at least one of:
the at least one adjacent device identifier;
the set of system port identifiers; or
the first set of adjacent device port identifiers.

6. The method of any of claims 1 to 5, further comprising retrieving, from the remote path data, at least one remote device identifier associated with the at least one of the plurality of remote devices.

7. The method of claims 3 to 6, further comprising identifying, based on the remote path data, a second set of adjacent device ports of the at least one of the plurality of adjacent devices connected to the at least one of the plurality of remote devices, optionally further comprising determining a second set of adjacent device port identifiers associated with the second set of adjacent device ports.

8. The method of any of claims 5 to 7, further comprising generating global network path data based on the local path data and the remote path data, optionally wherein the global network path data is indicative of a plurality of network paths connecting to the at least one of the plurality of remote devices.

9. The method of claim 8, wherein each network path of the plurality of network paths comprises:
a first set of sub-paths between the set of system ports and the first set of adjacent device ports, and
a second set of sub-paths between the second set of adjacent device ports and the at least one of the plurality of remote devices.

10. The method of any of claims 7 to 9, further comprising:
connecting to a distributed database;
storing at least one of: the local path data or the global network path data in the distributed database; and
retrieving the remote path data from the distributed database;
optionally, wherein the distributed database is synchronized with the plurality of remote devices.

11. The method of any of claims 1 to 10, wherein the plurality of adjacent devices include at least one spine switch and the plurality of remote devices include at least one leaf switch connected to the at least one spine switch.

12. A method comprising:
detecting an adjacent device connected to a system port;
generating local path data associated with the adjacent device;
retrieving remote path data associated with a plurality of remote devices;
determining, based on the remote path data, at least one of the plurality of remote devices connected to the adjacent device; and
generating, based on the local path data and the remote path data, a plurality of network paths connecting to the at least one of the plurality of remote devices.

13. The method of claim 12, wherein the local path data comprises at least one of:
an adjacent device identifier associated with the adjacent device,
a system port identifier associated with the system port, or
an adjacent device port identifier associated with an adjacent device port of the adjacent device connected to the system port.

14. The method of claim 12 or 13, further comprising retrieving, from the remote path data, at least one remote device identifier associated with the at least one of the plurality of remote devices.

15. The method of any of claims 12 to 14, further comprising:
identifying a set of adjacent device ports of the adjacent device connected to the at least one of the plurality of remote devices; and
determining a set of adjacent device port identifiers associated with the set of adjacent device ports.

16. A method, comprising:
detecting one or more adjacent devices;
determining at least one remote device connected to the one or more adjacent devices; and
generating a plurality of network paths connecting to the at least one remote device.
